# FASCICULE DE BREVET EUROPEEN

(11) **EP 3 149 442 B1**
(45) Date de publication et mention de la délivrance du brevet: **04.07.2018**
(21) Numéro de dépôt: 15732813.9
(22) Date de dépôt: 27.05.2015
(51) Int. Cl.: G01K 1/14, G01K 13/02, G01M 15/10

(54) **PEIGNE DE MESURE POUR MESURER DES PARAMÈTRES DES GAZ EN SORTIE D'UNE VEINE DE TURBOMACHINE**
MESSKAMM ZUR MESSUNG VON PARAMETERN DER AUS EINEM ARBEITENDEN ABSCHNITT EINER TURBOMASCHINE AUSTRETENDEN GASE
MEASURING COMB FOR MEASURING PARAMETERS OF THE GASES EXITING A TURBOMACHINE WORKING SECTION

(30) Priorité: 27.05.2014 FR 1454804
(43) Date de publication de la demande: 05.04.2017
(60) Demande divisionnaire: 17201775.8
(73) Titulaire: SAFRAN AIRCRAFT ENGINES, 75015 Paris (FR)
(72) Inventeur: LUNEL, Romain, Nicolas, 77550 Moissy-Cramayel (FR); CAMERIANO, Laurent, Bernard, 77550 Moissy-Cramayel (FR); GIORDAN, Jérémy, 77550 Moissy-Cramayel (FR); SANDELIS, Denis, Jean, Maurice, 77550 Moissy-Cramayel (FR); TEDESCO, Aurélien, Lionel, 77550 Moissy-Cramayel (FR)
(74) Mandataire: Regimbeau
(86) Numéro de dépôt international: PCT/FR2015/051400
(87) Numéro de publication internationale: WO 2015/181499

(56) Documents cités:
- US-B1- 6 595 062

## Description

### DOMAINE TECHNIQUE GENERAL

La présente invention concerne un peigne de mesure pour mesurer des paramètres des gaz s'écoulant en sortie d'une veine de turbomachine, tels que la température et/ou la pression et/ou la composition chimique.

### ETAT DE L'ART

Il est connu de l'état de l'art des peignes de mesure configurés pour mesurer des paramètres des gaz s'écoulant en sortie d'une veine de turbomachine, par exemple en sortie d'une chambre de combustion de turbomachine. De tels peignes de mesure sont par exemple décrits dans le document FR 2 952 713 de la Demanderesse.

De tels peignes de mesure comprennent typiquement un corps de peigne s'étendant globalement selon un axe d'orientation et comportant une partie inférieure profilée destinée à être positionnée en regard de la sortie de la chambre de combustion et une semelle supérieure destinée à être décalée relativement à la sortie de la chambre de combustion de façon à ne pas perturber l'écoulement des gaz en sortie de la chambre de combustion. La partie inférieure est munie d'orifices de mesure reliés à des mesureurs par l'intermédiaire de canaux. Les orifices de mesure sont alignés parallèlement à l'axe d'orientation du corps de peigne et sont fixes relativement audit corps de peigne.

Au cours des essais effectués sur la chambre de combustion, le corps de peigne est mis en rotation autour de l'axe de révolution de la chambre de combustion, par exemple par l'intermédiaire d'un anneau tournant sur lequel la semelle inférieure du corps de peigne est bridée. Les orifices de mesure prélèvent alors les gaz s'écoulant en sortie de la chambre de combustion, de sorte à mesurer les paramètres requis, comme par exemple la pression et/ou la température en sortie de la chambre de combustion. De tels peignes de mesure permettent ainsi de réaliser des cartographies de pression et/ou de température en sortie de la chambre de combustion.

Cependant, en sortie de la chambre de combustion, le flux de gaz n'est pas nécessairement orienté parallèlement à l'axe de la turbomachine. Il présente des effets tridimensionnels.

En effet, la chambre de combustion peut présenter une inclinaison relativement à l'axe de la turbomachine, et de ce fait induire une inclinaison du flux de gaz en sortie de la chambre.

En outre, l'utilisation de chambres de combustion présentant une dimension dans l'axe de la turbomachine réduite et/ou ne comprenant pas de système de refroidissement, tel que des orifices de dilution, permettant de renvoyer les gaz dilués dans l'axe de la turbomachine, induit une giration du flux de gaz. Autrement dit, le flux de gaz en sortie de la chambre de combustion présente une composante tangentielle relativement à l'axe de révolution de ladite chambre.

Or, les peignes de mesure décrits ci-dessous ne permettent pas de prendre en compte l'inclinaison et la giration des gaz s'écoulant en sortie de la chambre de combustion pour le prélèvement desdits gaz. Ainsi, il peut arriver que ces peignes de mesure ne permettent pas de prélever suffisamment de gaz en sortie de la chambre de combustion pour réaliser des mesures fiables.

La prise en compte de ces effets tridimensionnels est donc primordiale.

Pour répondre à ce besoin, il a été envisagé par la Demanderesse de développer des peignes de mesure présentant des orifices de mesure inclinés relativement à l'axe d'orientation du corps de peigne.

La Demanderesse s'est cependant aperçue en développant de tels peignes de mesure qu'il était nécessaire de multiplier par deux la largeur du corps de peigne, pour pouvoir assurer l'inclinaison des orifices de mesure par rapport à l'axe d'orientation du corps de peigne, et ainsi prendre en compte l'effet giratoire du flux de gaz en sortie de la chambre de combustion.

Or, un tel corps de peigne risquerait de perturber l'écoulement des gaz en amont du corps de peigne, et ainsi de fausser les mesures réalisées par le peigne de mesure.

Une telle solution n'a donc pas été retenue.

On connait déjà par le document US 6 595 062 un peigne de mesure selon le préambule de la revendication 1. Un tel peigne de mesure ne permet pas de prendre en compte les effets tridimensionnels des flux de gaz.

### PRESENTATION DE L'INVENTION

La présente invention, selon la revendication 1, a pour objectif de résoudre les problèmes précités en proposant un peigne de mesure pour mesurer des paramètres des gaz s'écoulant en sortie d'une veine de turbomachine, tels que la température et/ou la pression et/ou la composition chimique, dans lequel le ou les orifices de mesure sont orientables dans la direction du flux de gaz en sortie de la veine.

Plus précisément, la présente invention a pour objet un peigne de mesure de la température et/ou de la pression et/ou de la composition chimique des gaz s'écoulant en sortie d'une veine de turbomachine, ladite veine s'étendant autour d'un axe de révolution de la veine, ledit peigne de mesure comprenant un corps de peigne de forme allongée, destiné à venir en regard de la sortie de la veine, ledit corps de peigne comprenant au moins un orifice de mesure agencé selon un axe, l'orifice de mesure étant configuré pour prélever des gaz s'écoulant en sortie de la veine, ledit peigne de mesure étant en outre muni de moyens de réglage configurés pour régler un angle entre l'axe du ou des orifices de mesure et l'axe de révolution, de sorte à orienter le ou les orifices de mesure dans la direction d'écoulement des gaz en sortie de la veine.

Les orifices de mesure sont avantageusement reliés à des mesureurs configurés pour mesurer la température et/ou la pression et/ou la composition chimique des gaz prélevés par les orifices de mesure.

Le corps de peigne est une tige formant une ligne de rotation autour de laquelle le ou les orifices de mesure sont aptes à pivoter. La ligne de rotation formée par la tige peut être rectiligne ou incurvée.

La tige est munie d'une pluralité de modules accueillant chacun un orifice de mesure, les modules étant configurés pour pivoter autour de la tige indépendamment les uns des autres.

Il est également proposé un procédé pour mesurer la température et/ou la pression et/ou la composition chimique des gaz s'écoulant en sortie d'une chambre de combustion de turbomachine globalement annulaire, ladite chambre de combustion présentant un axe de révolution, dans lequel on positionne un peigne de mesure en sortie de la chambre de combustion, afin de prélever les gaz s'écoulant en sortie de celle-ci, ledit peigne de mesure comportant une pluralité d'orifices de mesure dont les axes s'étendent dans un même plan, caractérisé en ce que le peigne de mesure est incliné en sortie de ladite chambre, de sorte que le plan précité des axes des orifices de mesure et l'axe de révolution forment un angle non nul, et en ce que le même angle est conservé pour des essais dans des conditions de ralenti et plein gaz de la chambre de combustion.

Préférentiellement, une giration du flux de gaz en sortie de la chambre de combustion est calculée dans les conditions de ralenti et de plein gaz de la chambre de combustion de manière à déterminer une plage de giration du flux de gaz en sortie de la chambre de combustion.

Plus préférentiellement, les orifices de mesure présentent une plage limite de détection de la giration du flux de gaz, et dans lequel l'angle est choisi de sorte que la plage de giration du flux de gaz en sortie de la chambre de combustion soit inclue dans la plage limite de détection des orifices de mesure.

Préférentiellement, le peigne de mesure est incliné en sortie de la chambre de combustion, de sorte que le plan des axes des orifices de mesure et l'axe de révolution forment un angle compris entre 5 et 15°.

Préférentiellement, le peigne de rotation est mis en rotation autour de l'axe de révolution.

Préférentiellement, le même angle est conservé pour des essais dans des conditions de ralenti et plein gaz de la chambre de combustion.

### PRESENTATION DES FIGURES

D'autres caractéristiques, buts et avantages de la présente invention apparaitront à la lecture de la description détaillée qui va suivre, et en regard des dessins annexés donnés à titre d'exemples non limitatif et sur lesquels :
- la figure 1 représente une vue schématique de profil d'un peigne de mesure selon un premier mode de réalisation en position pour mesurer des paramètres des gaz s'écoulant en sortie d'une chambre de combustion ;
- la figure 2 représente une vue schématique de dessus du peigne de mesure et de la chambre de combustion illustrés à la figure 1 ;
- la figure 3 représente une vue en perspective du corps de peigne d'un peigne de mesure selon le premier mode de réalisation;
- la figure 4 présente une vue de schématique de dessus d'une orientation d'un peigne de mesure non admissible selon le premier mode de réalisation;
- la figure 5 présente une vue schématique de dessus d'une orientation d'un peigne de mesure admissible selon le premier mode de réalisation;
- la figure 6 représente un organigramme représentant différentes étapes d'un exemple de réalisation du procédé de mesure selon le premier mode de réalisation ;
- la figure 7 représente une vue schématique d'un peigne de mesure selon un mode de réalisation en position pour mesurer des paramètres des gaz s'écoulant en sortie d'une veine de turbomachine ;
- la figure 8 représente une vue schématique d'un premier exemple de corps de peigne de mesure selon le mode de réalisation de l'invention ;
- la figure 9 représente une vue schématique d'un deuxième exemple de corps de peigne de mesure selon le mode de réalisation de l'invention.

### DESCRIPTION DETAILLEE

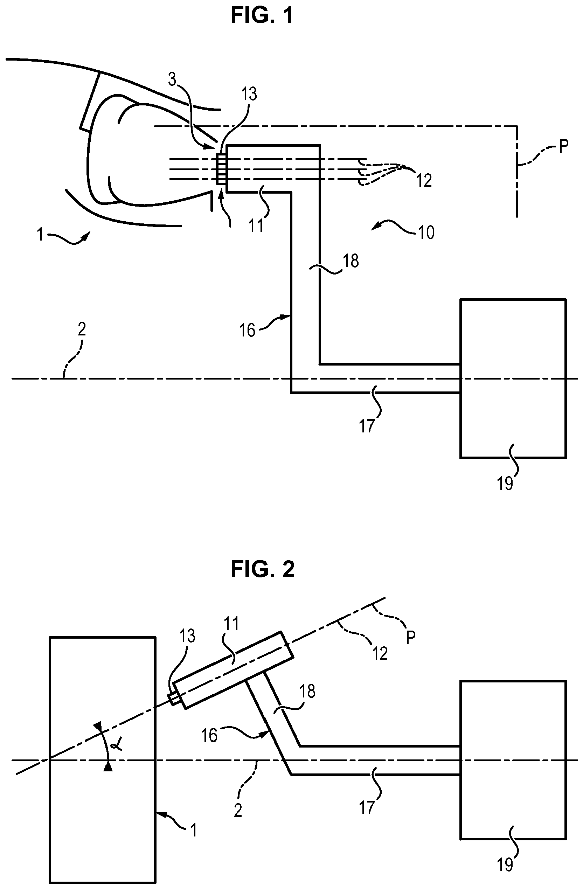

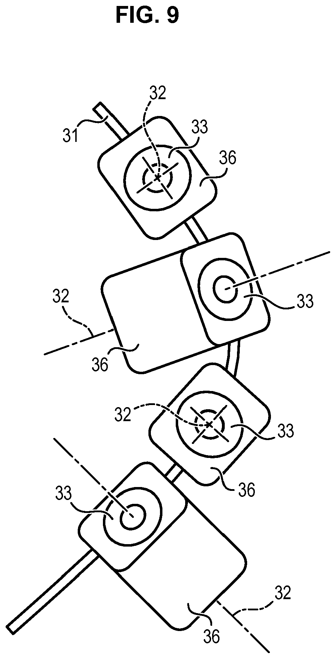

Les figures 1 à 3 et 7 à 9 représentent un peigne de mesure 10, 30 pour mesurer des paramètres des gaz s'écoulant en sortie d'une veine 1 de turbomachine présentant un axe de révolution 2, respectivement selon un premier et un deuxième modes de réalisation.

Les paramètres à mesurer sont par exemple la température et/ou la pression et/ou la composition chimique des gaz s'écoulant en sortie de la veine 1.

La veine 1 est par exemple une chambre de combustion comme cela est illustré à la figure 1. En variante, la veine 1 peut par exemple être un compresseur haute ou basse pression, une turbine haute ou basse pression, ou une tuyère d'échappement. L'homme du métier comprendra que cette liste n'est pas exhaustive et que la présente invention s'applique à toute veine de turbomachine.

Le peigne de mesure 10, 30 comprend un corps de peigne 11, 31 de forme allongée, destiné à venir en regard de la sortie de la veine 1. Le corps de peigne 11, 31 comprend au moins un orifice de mesure 13, 33 agencé selon un axe 12, 32. L'orifice de mesure 13, 33 est configuré pour prélever des gaz s'écoulant en sortie de la veine 1.

Le peigne de mesure 10, 30 comprend en outre des moyens de réglage 16, 36 configurés pour régler un angle entre l'axe 12, 32 du ou des orifices de mesure 13, 33 et l'axe de révolution 2, de sorte à orienter le ou les orifices de mesure 13, 33 dans la direction d'écoulement des gaz en sortie de la veine 1.

De cette manière, il est possible d'orienter les orifices de mesure 13, 33 dans la direction d'écoulement des gaz en sortie de la veine 1, et donc de prendre en compte leur inclinaison ainsi que leur giration par rapport à l'axe de révolution 2. Ainsi, les orifices 13, 33 permettent de prélever une plus grande quantité de gaz en sortie de la veine 1 et les mesures réalisées s'en trouvent améliorées.

Les orifices de mesure 13, 33 sont en outre reliés à des mesureurs 14, 34 configurés pour mesurer la température et/ou la pression et/ou la composition des gaz prélevés par les orifices de mesure 13, 33. Les mesureurs 14, 34 peuvent être configurés pour réaliser des mesures individuelles, c'est-à-dire par orifice de mesure 13, 33, ou moyennés sur tous les orifices de mesure 13, 33.

### Premier mode de réalisation

Les figures 1 et 2 représentent chacune une vue schématique, respectivement de profil et de dessus, d'un peigne de mesure 10 selon le premier mode de réalisation en position pour mesurer des paramètres des gaz s'écoulant en sortie d'une veine 1 de turbomachine. Dans l'exemple illustré aux figures 1 et 2, la veine 1 est une chambre de combustion globalement annulaire et présentant un axe de révolution 2.

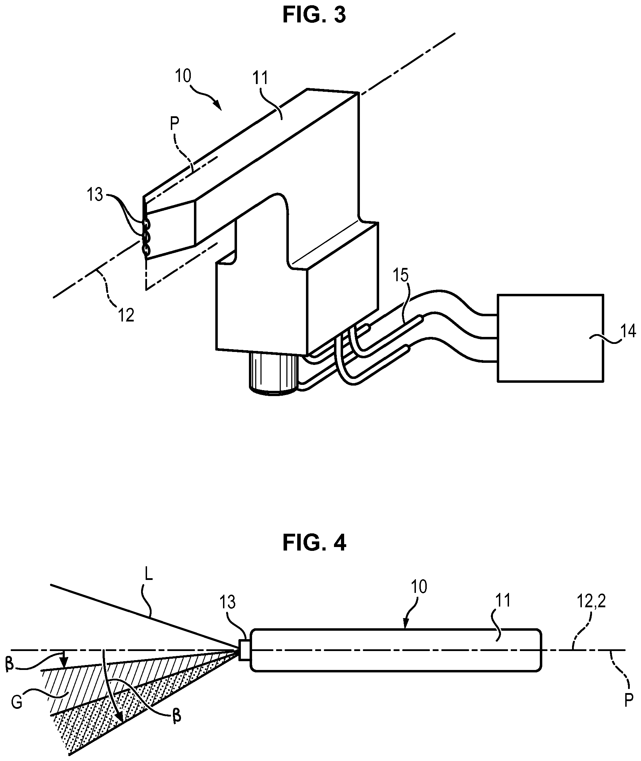

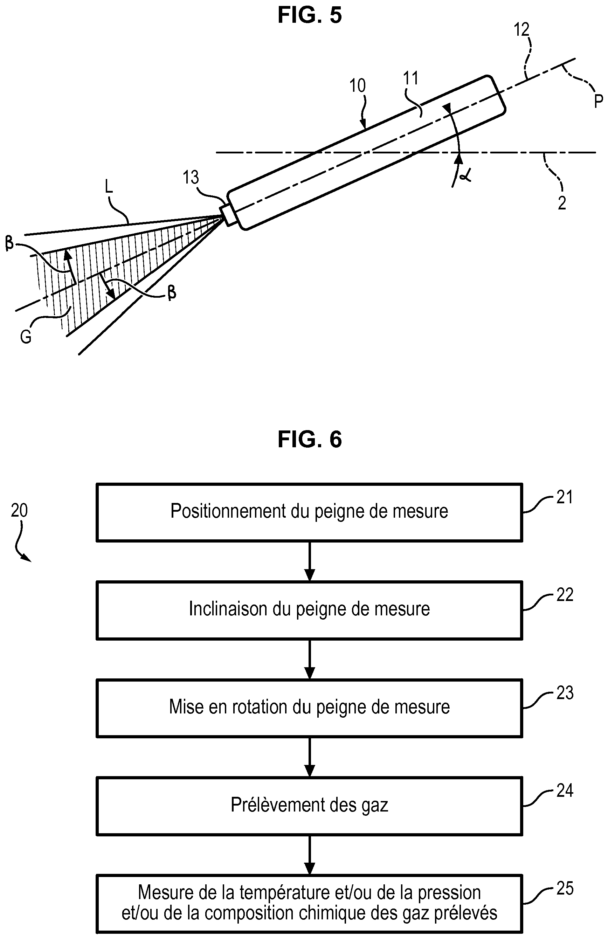

Le flux de gaz en sortie de la chambre de combustion 1 présente une plage de giration G définie entre des valeurs extrêmes de giration correspondant respectivement à un fonctionnement de la chambre de combustion 1 dans des conditions de ralenti et de plein gaz. Les valeurs extrêmes de giration correspondent à des angles β formés entre la direction du flux de gaz en amont du peigne de mesure 10 et les axes 12 des orifices (ou le plan P), respectivement dans des conditions de ralenti et de plein gaz de la turbomachine (figures 4 et 5).

Le peigne de mesure 10 comprend un corps de peigne 11 destiné à venir en regard de la sortie 3 de la chambre de combustion 1. Un exemple de corps de peigne 11 est illustré à la figure 3.

Le corps de peigne 11 a une forme globalement allongée et de préférence profilé de sorte à ne pas perturber l'écoulement des gaz en amont du corps de peigne 11, et ainsi ne pas fausser les mesures réalisées.

Le peigne de mesure 10 comprend en outre une pluralité d'orifices de mesure 13 ménagés dans le corps de peigne 11 et configurés pour prélever des gaz s'écoulant en sortie 3 de la chambre de combustion 1. Les orifices de mesure 13 présentent des axes 12 s'étendant dans un même plan P.

Dans l'exemple illustré à la figure 3, les axes 12 des orifices de mesure 13 sont parallèles entre eux. Selon une variante, les axes 12 des orifices de mesure 13 s'étendent globalement en éventail. Dans cette variante, les axes 12 des orifices de mesure 13 adjacents aux rayons interne et externe de la paroi de la chambre de combustion 1 sont par exemple globalement parallèles à ladite paroi respectivement au niveau des rayons interne et externe.

Les orifices de mesure 13 présentent une plage limite de détection L de la giration du flux de gaz au-delà de laquelle les orifices de mesure 13 ne peuvent pas prélever les gaz présentant une giration plus importante. Cette plage limite de détection L est par exemple de +/- 15 à 20° relativement à l'axe 12 de chacun des orifices de mesure 13. Lorsque la plage de giration G du flux de gaz en sortie de la chambre de combustion 1 et la plage limite de détection L se chevauchent comme illustré à la figure 4, l'orientation des orifices de mesure 13 n'est pas admissible.

Les orifices de mesure 13 sont reliés à des mesureurs 14 configurés pour mesurer la température et/ou la pression et/ou la composition des gaz prélevés par les orifices de mesure 13. Les mesureurs 14 peuvent être configurés pour réaliser des mesures individuelles, c'est-à-dire par orifice de mesure 13, ou moyennés sur tous les orifices de mesure 13. Les orifices de mesure 13 sont par exemple reliés aux mesureurs 14 par l'intermédiaire de canaux 15.

Le peigne de mesure 10 comprend en outre un bras 16 configuré pour incliner le corps de peigne 11 de sorte que le plan P des axes 12 des orifices de mesure 13 et l'axe de révolution 2 forment un angle α non nul. Avantageusement, le même angle α est conservé pour des essais dans des conditions de ralenti et plein gaz de la chambre de combustion 1. Plus précisément, l'angle α est choisi de sorte que la plage de giration G du flux de gaz en sortie de la chambre de combustion 1 soit inclue dans la plage limite de détection L comme illustré à la figure 5. Dans cette configuration, l'orientation du corps de peigne 11 est admissible.

L'angle α est de préférence compris entre 5 et 15°. Dans l'exemple illustré, l'angle α est compris entre 8 et 9°.

Le peigne de mesure 10 permet ainsi d'incliner les orifices de mesure 13 par rapport à l'axe de révolution 2, de sorte à prendre en compte l'effet giratoire du flux de gaz en sortie de la chambre de combustion 1, et ce aussi bien pour des essais en conditions de ralenti ou de plein gaz de la chambre de combustion 1. Ainsi, il est possible d'effectuer une série d'essais entre le ralenti et le plein gaz de la chambre de combustion 1 sans modifier l'angle α des orifices de mesure 13.

Dans l'exemple illustré à la figure 1, le bras 16 comprend une première portion 17 s'étendant selon l'axe de révolution 2, et une deuxième portion 18 s'étendant globalement radialement depuis la première portion 17 et reliant la première portion 17 au corps de peigne 11.

Selon une variante non représentée, le bras 16 comprend un anneau s'étendant autour l'axe de révolution 2, sur lequel le corps de peigne 11 est bridé.

Le bras 16 peut être relié à plusieurs corps de peigne 11 dont les orifices de mesure 13 présentent la même inclinaison relativement à l'axe de révolution 2. Le bras 16 peut par exemple comprendre plusieurs deuxièmes portions 18 s'étendant radialement depuis la première portion 17, chacune des deuxièmes portions 18 étant reliées à un corps de peigne 11. Selon une variante, plusieurs corps de peigne 11 peuvent être bridés sur l'anneau. Les corps de peigne 11 sont avantageusement répartis de manière équidistante dans un plan globalement perpendiculaire l'axe de révolution 2.

Le peigne de mesure 10 comprend également un moteur 19 configuré pour entraîner le corps de peigne 11 en rotation autour de l'axe de révolution 2. Le moteur 19 est par exemple relié à la première portion 17 du bras 16 ou à l'anneau sur lequel le corps de peigne 11 est bridé.

La figure 6 est un organigramme illustrant un procédé 20 pour mesurer des paramètres, par exemple la température et/ou la pression et/ou la composition chimique, des gaz s'écoulant en sortie 3 de la chambre de combustion 1. Le procédé 20 comprend les étapes de :
- positionnement 21 du corps de peigne 11 en regard de la sortie 3 de la chambre de combustion 1,
- inclinaison 22 du corps de peigne 11 en sortie de la chambre de combustion 1 de sorte que le plan P des axes 12 des orifices de mesure 13 et l'axe de révolution 2 forment l'angle α non nul. Avantageusement, le même angle α est conservé pour des essais dans des conditions de ralenti et plein gaz de la chambre de combustion 1,
- mise en rotation 23 du corps de peigne 11 autour de l'axe de révolution 2,
- prélèvement 24 des gaz s'écoulant en sortie 3 de la chambre de combustion 1 par les orifices de mesure 13, et
- mesure 25 des paramètres, par exemple la température et/ou la pression et/ou la composition chimique des gaz prélevés.

L'angle α est défini de sorte à pouvoir réaliser avec un même angle α des essais dans des conditions de ralenti et de plein gaz de la chambre de combustion 1. Pour cela, la giration du flux de gaz en sortie de la chambre de combustion 1 est calculée dans des conditions de ralenti et de plein gaz de la chambre de combustion 1 (l'angle β) de manière à déterminer la plage de giration G du flux de gaz en sortie de la chambre de combustion 1, et l'angle α est choisi de sorte que la plage de giration G du flux de gaz en sortie de la chambre de combustion 1 soit inclue dans la plage limite de détection des orifices de mesure 13.

Le procédé 20 permet ainsi d'incliner les orifices de mesure 13 par rapport à l'axe de révolution 2, de sorte à prendre en compte l'effet giratoire du flux de gaz en sortie 3 de la chambre de combustion 1, et ce aussi bien pour des conditions de fonctionnement de ralenti ou de plein gaz de la chambre de combustion 1. Ainsi, il est possible d'effectuer une série d'essais entre le ralenti et le plein gaz de la chambre de combustion 1 sans modifier l'angle α des orifices de mesure 13.

### Mode de réalisation de l'invention

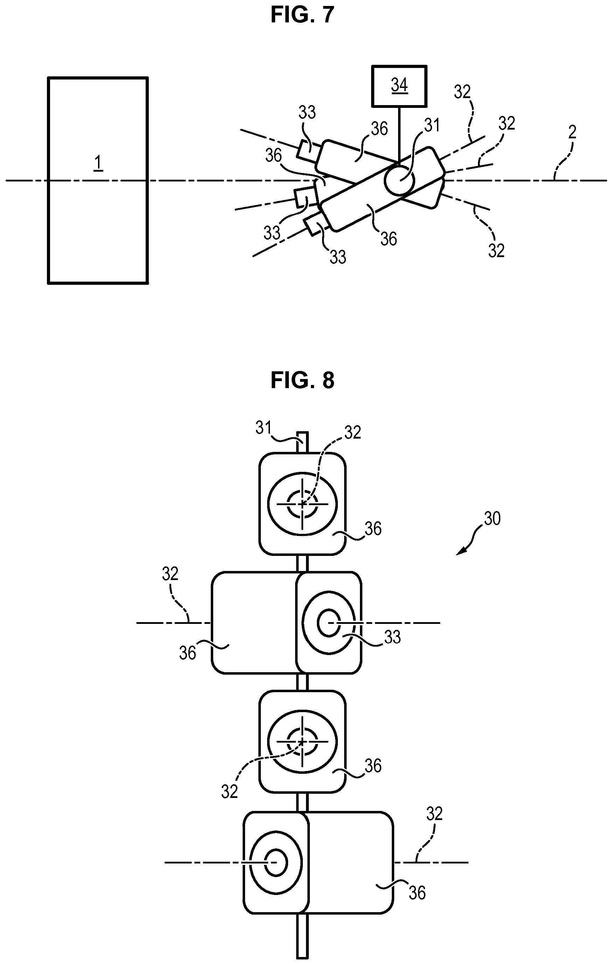

Les figures 7 à 9 représentent chacune un exemple de peigne de mesure 30 selon le deuxième mode de réalisation.

Dans ces exemples, le corps de peigne 31 est une tige formant une ligne de rotation autour de laquelle le ou les orifices de mesure 33 sont aptes à pivoter. La tige 31 est munie d'une pluralité de modules 36 accueillant chacun un orifice de mesure 33, chacun des modules 36 étant configuré pour pivoter autour de la tige 31 indépendamment les uns des autres.

De cette manière, les axes 32 des orifices de mesure 33 peuvent présenter une inclinaison différente les uns par rapport aux autres relativement à l'axe de révolution 2 de la veine 1. Il est donc possible d'adapter l'orientation de chacun des orifices de mesure 33 en fonction de la direction d'écoulement des gaz à leur position en sortie de la veine 1.

La tige 31 peut par exemple être filetée, sur toute sa longueur ou par tronçon, et les modules 36 peuvent être chacun munis d'un alésage taraudé complémentaire avec le filetage de la tige 31, de sorte à permettre le pivotement des modules 36 autour de la ligne de rotation.

Les modules 36 peuvent avantageusement être séparés entre eux par des entretoises (non représentées) de sorte à maintenir à distance fixe les modules 36 entre eux.

Chaque peigne de mesure 30 est par exemple relié à un anneau (non représenté) s'étendant autour de l'axe de révolution 2 de la veine 1. Pour cela, un collier atlas ou une vis-pointeau peut être utilisé pour relier chacun des peignes de mesure 30 à l'anneau.

Dans l'exemple illustré à la figure 7, la ligne de rotation formée par la tige 31 est rectiligne. Dans la variante illustrée à la figure 8, la ligne de rotation formée par la tige 31 est courbe.

Les peignes de mesure 10, 30 proposés ont pour avantage d'être munis de moyens de réglage 16, 36 permettant d'orienter les orifices de mesure 13, 33 dans la direction d'écoulement des gaz en sortie de la veine 1, et donc de prendre en compte les effets tridimensionnels du flux de gaz de sorte à prélever une plus grande quantité de gaz et de réaliser des mesures de meilleure qualité.

## Revendications

1. Peigne de mesure (30) de la température et/ou de la pression et/ou de la composition chimique des gaz s'écoulant en sortie d'une veine (1) de turbomachine, ladite veine (1) s'étendant autour d'un axe de révolution (2) de la veine (1), comprenant
- un corps de peigne (31) de forme allongée, destiné à venir en regard de la sortie de la veine (1), ledit corps de peigne (31) comprenant au moins un orifice de mesure (33) agencé selon un axe (32), l'orifice de mesure (33) étant configuré pour prélever des gaz s'écoulant en sortie de la veine (1),
- des moyens de réglage (36) configurés pour régler un angle entre l'axe (32) du ou des orifices de mesure (33) et l'axe de révolution (2), de sorte à autoriser une orientation du ou des orifices de mesure (33) dans la direction d'écoulement des gaz en sortie de la veine (1),
- le corps de peigne (31) est une tige formant une ligne de rotation autour de laquelle le ou les orifices de mesure (33) sont aptes à pivoter, **caractérisé en ce que** la tige (31) étant munie d'une pluralité de modules (36) accueillant chacun un orifice de mesure (33), les modules (36) étant configurés pour pivoter autour de la tige (31) indépendamment les uns des autres.

2. Peigne de mesure (30) selon la revendication 1, dans lequel la ligne de rotation formée par la tige (31) est rectiligne.

3. Peigne de mesure (30) selon la revendication 1, dans lequel la ligne de rotation formée par la tige (31) est courbe.

4. Peigne de mesure selon la revendication 1, dans lequel les orifices de mesure sont reliés à des mesureurs configurés pour mesurer la température et/ou la pression et/ou la composition chimique des gaz prélevés par les orifices de mesur.

## Patentansprüche

1. Messkamm (30) für Temperatur und/oder Druck und/oder chemische Zusammensetzung der am Auslass eines Turbinentriebwerk-Strömungspfads (1) strömenden Gase, wobei sich der Strömungspfad (1) um eine Rotationsachse (2) des Strömungspfads (1) erstreckt, aufweisend
- einen Kammkörper (31) mit einer länglichen Form, vorgesehen, um gegen den Auslass des Strömungspfads (1) gerichtet zu sein, wobei der Kammkörper (31) mindestens eine Messöffnung (33) aufweist, die entlang einer Achse (32) angeordnet ist, wobei die Messöffnung (33) konfiguriert ist zum Anzapfen von Gasen die am Auslass des Strömungspfads (1) strömen,
- Einstellmittel (36), die konfiguriert sind für Einstellen eines Winkels zwischen der Achse (32) der mindestens einen Messöffnung (33) und der Rotationsachse (2), um eine Ausrichtung der mindestens einen Messöffnung (33) in der Strömungsrichtung der Gase am Auslass des Strömungspfads (1) zu ermöglichen,
**dadurch gekennzeichnet, dass** der Kammkörper (31) ein Stab ist, der eine Rotationlinie bildet, um die sich die mindestens eine Messöffnung (33) drehen kann,
wobei der Stab (31) mit mehreren Modulen (36) ausgerüstet ist, die jeweils eine Messöffnung (33) aufnehmen, wobei die Module (36) konfiguriert sind, um unabhängig voneinander um den Kammkörper (31) zu rotieren.

2. Messkamm (30) nach Anspruch 1, wobei die vom Stab (31) gebildete Rotationlinie geradlinig ist.

3. Messkamm (30) nach Anspruch 1, wobei die vom Stab (31) gebildete Rotationlinie gekrümmt ist.

4. Messkamm nach Anspruch 1, wobei die Messöffnungen mit Messinstrumenten verbunden sind, die für Messen von Temperatur und/oder Druck und/oder chemischer Zusammensetzung der von den Messöffnungen angezapften Gase konfiguriert sind.

## Claims

1. A measuring comb (30) for temperature and/or pressure and/or chemical composition of the gases flowing at the outlet of a turbine engine flow path (1), said flow path (1) extending around an axis of revolution (2) of the flow path (1) comprising
- a comb body (31) with an elongated shape, intended to face the outlet of the flow path (1), said comb body (31) comprising at least one measuring opening (33) arranged along an axis (32), the measuring opening (33) being configured to tap gases flowing at the outlet of the flow path (1),
- adjusting means (36) configured to adjust an angle between the axis (32) of the measuring opening(s) (33) and the axis of revolution (2), so as to allow orientation of the measuring opening (s) (33) in the flow direction of the gases at the outlet of the flow path (1),
**characterized in that** the comb body (31) is a rod forming a rotation line around which the measuring opening(s) (33) are capable of pivoting,
the rod (31) being equipped with a plurality of modules (36) each accommodating a measuring opening (33), the modules (36) being configured to pivot around the rod (31) independently from each other.

2. The measuring comb (30) according to claim 1, wherein the rotation line formed by the rod (31) is rectilinear.

3. The measuring comb (30) according to claim 1, wherein the rotation line formed by the rod (31) is curved.

4. The measuring comb according to claim 1, wherein the measuring openings are connected to measuring instruments configured for measuring temperature and/or pressure and/or chemical composition of the gases tapped by the measuring openings.
